# EUROPÄISCHE PATENTSCHRIFT

(11) **EP 2 218 606 B1**
(45) Veröffentlichungstag und Bekanntmachung des Hinweises auf die Patenterteilung: **07.09.2011**
(21) Anmeldenummer: 10000392.0
(22) Anmeldetag: 18.01.2010
(51) Int. Cl.: B60K 35/00, B60R 11/02, G01C 21/36

(54) **Kraftfahrzeug mit einer Wiedergabeeinrichtung zur in Abhängigkeit der erfassten Sitzposition des Fahrers steuerbare Wiedergabe von Bildinformationen**
Motor vehicle with a display device for controllable display of image information depending on the determined sitting position
Véhicule automobile doté d'un dispositif de retransmission destiné à la retransmission pouvant être commandée de données images en fonction de la position établie du siège du conducteur

(30) Priorität: 11.02.2009 DE 102009008492
(43) Veröffentlichungstag der Anmeldung: 18.08.2010
(73) Patentinhaber: Audi AG, 85045 Ingolstadt (DE)
(72) Erfinder: Hamberger, Werner, Dr., 85101 Lenting (DE); Hummel, Stephan, Dr., 85049 Ingolstadt (DE)
(74) Vertreter: Thielmann, Frank

(56) Entgegenhaltungen:
- EP-A2- 1 977 926
- WO-A1-2007/141614
- US-A1- 2008 129 684

## Beschreibung

Die Erfindung betrifft ein Kraftfahrzeug mit einer Wiedergabeeinrichtung zur Wiedergabe von Bildinformationen umfassend eine Steuerungseinrichtung und ein Anzeigedisplay.

Wiedergabeeinrichtungen zur Wiedergabe von Bildinformationen werden heutzutage in vielen modernen Kraftfahrzeugen eingesetzt und zählen zum Stand der Technik. Diese Wiedergabeeinrichtungen können zur Wiedergabe von Informationsinhalten beispielsweise eines Navigationssystems dienen, die einen Fahrer bei der Zielführung zu einem gegebenen Ziel unterstützen. Dies wird in der Regel über optische Darstellungen von Straßenkarten auf einem Bildschirm und zusätzliche akustische Hinweise bewerkstelligt. Darüber hinaus ist eine Vielzahl solcher Wiedergabeeinrichtungen auch zur Wiedergabe von Unterhaltungsinhalten wie z. B. TV-Programmen oder DVD-Filmen in der Lage. Diese sollen jedoch vor allem einem Beifahrer zur Verfügung stehen und ihm, insbesondere auf langen Strecken, einen größeren Reisekomfort gewähren. Der Fahrer soll aufgrund der zu großen Ablenkung vom Verkehrsgeschehen von einer Teilnahme an derartigen Unterhaltungsinhalten während der Fahrt ausgeschlossen sein.

Die DE 197 37 942 C2 stellt eine Anzeigeeinheit in Form eines Displays in einem Kraftfahrzeug vor, wobei Abbildungen auf dem Display über die Schaltung eines Flüssigkristall-Elements steuerbar und entweder in einem kleinen oder einem großen Winkelbereich sichtbar sind, wobei der kleine Winkelbereich nur auf einen Beifahrer und der große Winkelbereich sowohl auf den Beifahrer als auch auf einen Fahrer ausgerichtet ist. Eine Betrachtung von Abbildungen auf dem Display ist für den Fahrer folglich nur bei Schaltung des Flüssigkristall-Elements in den großen Winkelbereich möglich.

Aus DE 102 14 789 A1 ist eine Vorrichtung und ein Verfahren zur Einschränkung der Sicht eines Fahrers auf eine Anzeigeeinrichtung bekannt, welche seine Sicht auf einen Bildschirm bei einer die Sicherheit gefährdenden Fahr- bzw. Wiedergabesituation verhindert, wobei gleichzeitig einem Beifahrer die Betrachtung eines Unterhaltungsangebots nicht verwehrt wird. Die Vorrichtung umfasst wenigstens eine Stellvorrichtung zur Sichteinschränkung des Fahrers auf den Bildschirm, über welche seine Sicht auf den Bildschirm veränderbar ist. Die Sicht des Fahrers auf den Bildschirm wird hierbei entsprechend der Fahr- und/oder Widergabesituation geregelt. In einer Ausführungsform sind durch die Stellvorrichtung zwei Blickwinkelbereiche des Bildschirms definierbar, welche jeweils dadurch gekennzeichnet sind, dass sie eine Betrachtung eines Bildes auf dem Bildschirm ausschließlich fahrer- oder ausschließlich beifahrerseitig zulassen. Der Bildschirm kann hierbei als Flüssigkristallbildschirm ausgebildet sein, bei dem eine Veränderung des Blickwinkels über die Orientierung der Flüssigkristalle herbeiführbar ist. Es ist auch möglich den Bildschirm derart zu gestalten, dass in verschiedenen Bildbereichen gleichzeitig unterschiedliche Bilder anzeigbar sind.

Trotz Sichteinschränkung ist der Fahrer jedoch weiterhin im Stande, durch Herüberbeugen in Richtung des Beifahrers sich Zugang in den Sichtbereich des Beifahrers und dessen Bilddarstellung zu verschaffen, so dass er während der Fahrt ein aus Sicht des Beifahrers betrachtbares Unterhaltungsangebot auf dem Display einsehen kann.

Ein Kraftfahrzeug mit einer Wiedergabevorrichtung für Bildinformationen ist aus der die Merkmale des Oberbegriffs des Anspruchs 1 zeigenden US 2008/0129684 A1 bekannt.

Der Erfindung liegt demnach die Aufgabe zugrunde, ein Kraftfahrzeug gemäß dem Oberbegriff derart zu gestalten, dass eine Betrachtung der beifahrerseitigen Bilddarstellungen durch den Fahrer verhindert wird.

Dieses Problem wird bei einem Kraftfahrzeug der eingangs genannten Art erfindungsgemäß dadurch gelöst, dass über die Steuerungseinrichtung gleichzeitig eine erste und eine zweite Bilddarstellung, die jeweils die Anzeigefläche des Anzeigedisplays belegen, darstellbar sind, wobei die erste Bilddarstellung nur aus einem ersten ausgezeichneten Blickwinkelbereich, der zum Fahrer gerichtet ist, und die zweite Bilddarstellung nur aus einem zweiten Blickwinkelbereich, der zum Beifahrer gerichtet ist, erkennbar ist, und wobei wenigstens eine der Steuerungseinrichtung zugeordnete Erfassungseinrichtung vorgesehen ist, über die die Position des Fahrers direkt oder indirekt erfassbar ist, wobei die Wiedergabe der zweiten Bilddarstellung in Abhängigkeit des Positionserfassungsergebnisses steuerbar ist.

Bei dem Kraftfahrzeug mit einer Wiedergabeeinrichtung zur Wiedergabe von Bildinformationen wird die Position des Fahrers über wenigstens eine Erfassungseinrichtung erfasst. Das Kraftfahrzeug ist hierbei mit einer Steuerungseinrichtung und einem Anzeigedisplay ausgestattet. Die Steuerungseinrichtung ist derart ausgebildet, dass auf einem Anzeigedisplay eine erste und eine zweite Bilddarstellung dargestellt werden kann, welche jeweils die gesamte Fläche des Anzeigedisplays belegen, wobei die erste Bilddarstellung nur aus einem ersten definierten Blickwinkelbereich, der zum Fahrer gerichtet ist, und die zweite Bilddarstellung nur aus einem zweiten definierten Blickwinkelbereich, der zum Beifahrer gerichtet ist, zu betrachten ist. Die erste und die zweite Bilddarstellung sind dabei von der Steuerungseinrichtung getrennt voneinander steuerbar. Der Steuerungseinrichtung ist wenigstens eine Erfassungseinrichtung zugeordnet, über die die Position des Fahrers direkt oder indirekt erfasst wird. Die Wiedergabe der zweiten Bilddarstellung wird über die Erfassungseinrichtung und die Steuerungseinrichtung in Abhängigkeit der erfassten Position des Fahrers gesteuert. Die Erfassungseinrichtung erkennt beispielsweise ein Herüberbeugen des Fahrers in den Blickwinkelbereich des Beifahrers und gibt diese Ergebnis über ein Signal an die Steuerungseinrichtung weiter, welche z. B. ein Abschalten oder ein Standbild, zumindest jedoch eine eingeschränkte Wiedergabe der zweiten Bilddarstellung herbeiführt. Das erfindungsgemäße Kraftfahrzeug mit einer Wiedergabeeinrichtung trägt demnach wesentlich zur Erhöhung der Sicherheit im Straßenverkehr bei, da der Fahrer keine Möglichkeit hat, die zweite Bilddarstellung zu betrachten, was bekanntermaßen zu einer gefährlichen Ablenkung führen würde.

Zudem ist die Erfassungseinrichtung als eine Erfassungseinrichtung zur unmittelbaren oder mittelbaren Ermittlung der Abrolllänge eines Gurtbands eines Sicherheitsgurts eines fahrerseitigen Sicherheitsgurtsystems ausgestaltet. Um in den zweiten Blickwinkelbereich des Beifahrers zu gelangen und sich Einsicht in dessen zweite Bilddarstellung zu verschaffen, muss der Fahrer seinen Körper in Richtung des Beifahrers bewegen. Durch ein Herüberbeugen des Fahrers in Richtung des Beifahrers erfährt das Gurtband des angelegten Sicherheitsgurts eine Beanspruchung in Form einer außergewöhnlichen Änderung seiner Abrolllänge, welche von der Erfassungseinrichtung detektiert wird. Diese sendet ein Signal an die Steuerungseinrichtung, welche die Wiedergabe der zweiten Bilddarstellung ändert.

Dabei wird die Wiedergabe von Bilddarstellungen auf dem Anzeigedisplay in Abhängigkeit eines Vergleichs der erfassten Abrolllänge des Gurtbands des Sicherheitsgurts des fahrerseitigen Sicherheitsgurtsystems mit einem definierten Längentoleranzbereich gesteuert. Somit kann ausgeschlossen werden, dass der Beifahrer durch kleinere Bewegungen des Fahrers, die noch keinem Herüberbeugen entsprechen, wie sie beispielsweise durch Bewegungen beim Schulterblick oder Einparken erforderlich sind, in der Betrachtung seiner zweiten Bilddarstellung aus seinem zweiten Blickwinkelbereich gestört wird.

Der Längentoleranzbereich des Gurtbands ist vorzugsweise fahrerspezifisch einstellbar. Die Einstellung kann entweder ab Werk oder vom Fahrer selbst vorgenommen werden. Letzteres ist insbesondere für Fälle, in denen ein Kraftfahrzeug abwechselnd von Personen unterschiedlicher Körperfülle genutzt wird von Vorteil. Die Erfassungseinrichtung kann hierbei zusätzlich über einen Speicher verfügen, der verschiedene eingestellte Längentoleranzbereiche beinhalten kann, und je nach Auswahl des Fahrers spezifisch anwendet. Auch die Vorraussetzung einer bestimmten Mindestabrolllänge des Gurtbands ist vorstellbar, die gewährleistet, dass der Fahrer den Gurt nicht hinter seinem Körper führt.

Zur Überprüfung, ob der Fahrer überhaupt einen Sicherheitsgurt anlegt, ist die Erfassungseinrichtung oder die Steuerungseinrichtung derart ausgebildet, dass sie das Einstecken des Sicherheitsgurts des fahrerseitigen Sicherheitsgurtsystems in ein zugehöriges Gurtschloss erkennen kann. Die Wiedergabe von Bilddarstellungen ist also zusätzlich an das ordnungsgemäße Anlegen des fahrerseitigen Sicherheitsgurts gekoppelt.

Die die Gurtabwicklung ermittelnde Erfassungseinrichtung kann verschiedenartig ausgeführt sein. Die Erfassungseinrichtung kann mit mindestens einem Sensor ausgestattet sein, der direkt mit dem Gurtband des Sicherheitsgurts zusammenwirkt. Alternativ oder ergänzend kann über den oder einen weiteren Sensor der Erfassungseinrichtung auch die Drehung einer Welle, auf der das Gurtband aufgewickelt ist, oder eine beim Abrollen des Sicherheitsgurts entstehende Rückstellkraft einer gespannten Rückholfeder aufgenommen werden.

Zusätzlich zu der die Gurtabwicklung erfassende Erfassungseinrichtung kann die Erfassungseinrichtung zumindest eine Kamera, die wenigstens die Position des Fahrers aufnimmt, aufweisen. Anhand des Kamerasignals kann die Erfassungseinrichtung über eine Verarbeitungseinrichtung zur Bildanalyse der Kameraaufnahmen Bewegungen sowie die Position des Fahrers auswerten. Alternativ oder unterstützend zu den vorgenannten Ausführungen, welche im Wesentlichen auf eine Positionserkennung des Fahrers in direkter oder indirekter Form über die sensorisch erfasste Abrolllänge des Sicherheitsgurts des fahrerseitigen Sicherheitsgurtsystem abzielen, kann die Bildinformation, die eine Kamera liefert, genauere Erkenntnis über die tatsächliche Position des Fahrers liefern. Denn ein Herüberbeugen wird von der Kamera sofort und eindeutig erkannt, woraufhin unmittelbar die Bildsteuerung geändert werden kann. Ist die Kamera zusätzlich zu dem Gurtsensor vorgesehen, kann überprüft werden, ob Signale, welche über den Gurtsensor bereitgestellt werden, wahrheitsgetreue Informationen enthalten und so ein gegebenenfalls fälschlicherweise über Information des Gurtsensors herbeigeführtes Positionsergebnis des Fahrers widerlegt beziehungsweise korrigiert werden. Der Komfort für die Betrachtung der zweiten Bilddarstellung für den Beifahrer kann derart gesteigert werden.

In einer weiteren vorteilhaften Ausführungsform der Erfindung ist die Erfassungseinrichtung beziehungsweise die Verarbeitungseinrichtung zur Bildanalyse der Kameraaufnahmen mit Mitteln zur Personen- beziehungsweise Gesichtserkennung ausgestattet, durch welche eine weitere Überprüfung oder Analyse des Kamerabilds möglich und letztendlich eine noch genauere Positionserfassung des Fahrers erzielbar ist. Es ist beispielsweise möglich, die Kopf- oder Augenbewegungen des Fahrers zu detektieren und schon im Vorfeld zu erkennen, ob ein bestimmtes Interesse des Fahrers an der beifahrerseitigen Bilddarstellung besteht, welches sich in einem wiederholten Herüberblicken beziehungsweise einem Entfernen oberer Körperbereiche aus einer natürlichen Sitzposition während der Fahrt in Richtung des zweiten Blickwinkelbereichs des Beifahrers offenbart.

Es ist außerdem von Vorteil, wenn eine Erfassungseinrichtung zusätzlich zur vorgenannten Sensoranordnung sowie zusätzlich zur Kamera über einen vorzugsweise in Nähe des Anzeigedisplays angebrachten Anstands- beziehungsweise Näherungssensor verfügt, welcher den Abstand des Fahrers beispielsweise zu dem Anzeigedisplay detektiert und ebenfalls, gegebenenfalls unterstützt von einer Verarbeitungseinrichtung zur Auswertung der Information des Abstands- beziehungsweise Näherungssensors dessen Position beziehungsweise Bewegungen feststellen kann. So kann beispielsweise eine Annäherung des Fahrers an den zweiten Blickwinkelbereich des Beifahrers, die sich durch ein Herüberbeugen zwangsweise ergibt, ermittelt werden. Der Abstands- beziehungsweise Näherungssensor kann hierbei in Form eines Ultraschall- oder Infrarotsensors ausgebildet sein.

Zudem kann die Erfassungseinrichtung mindestens eine im Sitz des Fahrers angebrachte Sensoranordnung umfassen, über welche eine Änderung des auf dem Sitz lastenden Fahrergewichts beziehungsweise dessen Verteilung erkennbar ist, welche eine Änderung der Fahrerposition widerspiegelt. Es ist offensichtlich, dass sich durch eine Bewegung des Fahrers in Richtung des zweiten Blickwinkelbereichs des Beifahrers eine Änderung der Last beziehungsweise der Lastverteilung auf der Sitzfläche, gegebenenfalls auch auf der Lehnfläche, des Fahrersitzes ergibt. In unterstützender Ergänzung ist somit ein noch genaueres Positionserfassungsergebnis der Erfassungseinrichtung realisierbar. Eine jeweilige Sensoranordnung kann z. B. in Form eines Sensorarrays mit verteilt angeordneten Sensorelementen zur großflächigen Gewichtserfassung ausgebildet sein.

Es ist ferner von Vorteil, eine ebenfalls der Erfassungseinrichtung zugeordnete weitere Sensoranordnung im Sitz des Beifahrers vorzusehen, mittels derer die Belegung des Beifahrersitzes mit einem Beifahrer feststellbar und in der Folge eine Wiedergabe der zweiten Bilddarstellung ausschließlich bei Sitzbelegung des Beifahrersitzes mit einem Beifahrer möglich ist. Bei Nichtbelegung des Beifahrersitzes mit einem Beifahrer ist beispielsweise von vornherein nur eine eingeschränkte Nutzung des Anzeigedisplays möglich. Eine jeweilige Sensoranordnung kann wiederum in Form eines Sensorarrays mit verteilt angeordneten Sensorelementen zur großflächigen Gewichtserfassung ausgebildet sein.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eine erfindungsgemäßen Kraftfahrzeugs mit einer Wiedergabeeinrichtung zur Wiedergabe von Bildin- formationen umfassend eine Steuerungseinrichtung,
- Fig. 2: eine Ausführungsform des erfindungsgemäßen Kraftfahrzeugs,
- Fig. 3: eine weitere Ausführungsform des erfindungsgemäßen Kraft- fahrzeugs,
- Fig. 4: eine weitere Ausführungsform des erfindungsgemäßen Kraft- fahrzeugs, und
- Fig. 5: eine weitere Ausführungsform des erfindungsgemäßen Kraft- fahrzeugs.

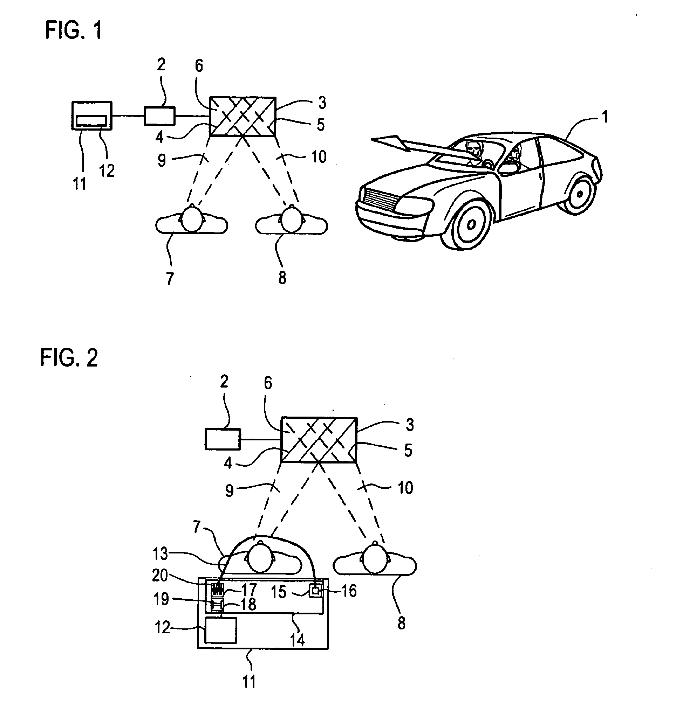

In Fig. 1 ist ein schematischer Ausschnitt aus dem erfindungsgemäßen Kraftfahrzeug 1 mit einer Wiedergabeeinrichtung zur Wiedergabe von Bildinformationen umfassend eine Steuerungseinrichtung 2 und ein Anzeigedisplay 3 abgebildet. Die Steuerungseinrichtung 2 ermöglicht gleichzeitig zwei unterschiedliche Bilddarstellungen 4, 5 über der gesamten Anzeigefläche 6 des Anzeigedisplays 3 für Fahrer 7 und Beifahrer 8 in Abhängigkeit verschiedener Blickwinkelbereiche 9, 10 mit einer ersten Bilddarstellung 4, gekennzeichnet durch durchgezogene Linien, für den Fahrer 7 in einem ersten ausgezeichneten Blickwinkelbereich 9 und einer zweiten Bilddarstellung 5, gekennzeichnet durch gestrichelte Linien, für den Beifahrer 8 in einem zweiten ausgezeichneten Blickwinkelbereich 10. Der Steuerungseinrichtung 2 ist wenigstens eine Erfassungseinrichtung 11 zugeordnet, die direkt oder indirekt die Position des Fahrers 7 erfasst. Der Erfassungseinrichtung 11 ist gegebenenfalls eine Verarbeitungseinrichtung 12 zugehörig, die die Informationen der in den Ausführungsbeispielen genannten Maßnahmen zur Bestimmung der Position des Fahrers 7 auswertet. Die Erfassungseinrichtung 11 gibt Informationen über die aktuelle Position des Fahrers 7, gegebenenfalls aus der Verarbeitungseinrichtung 12, über Signale an die Steuerungseinrichtung 2 weiter. Die Wiedergabe der zweiten Bilddarstellung 5 im zweiten Blickwinkelbereich 10 für den Beifahrer 8 ist von der Steuerungseinrichtung 2 in Abhängigkeit der Informationen der Erfassungseinrichtung 11 über die aktuelle Position des Fahrers 7 steuerbar. Für den Fall, dass sich der Fahrer 7 durch ein Herüberbeugen aus seinem ersten Blickwinkelbereich 9 in den zweiten Blickwinkelbereich 10 des Beifahrers 8 Einblick in dessen zweite Bilddarstellung 5 verschaffen will, ist eine Einschränkung dieser möglich, die es dem Fahrer 7 verwehrt eine befriedigende Betrachtung der zweiten Bilddarstellung 5 des Beifahrers 8 zu erhalten.

Fig. 2 zeigt eine erste Ausführungsform des erfindungsgemäßen Kraftfahrzeugs 1. Die Wiedergabeeinrichtung bestehend aus einer Steuerungseinrichtung 2 und einem Anzeigedisplay 3 ist in der Lage auf der Anzeigefläche 6 des Anzeigedisplays 3 gleichzeitig zwei unterschiedliche Bilddarstellungen 4, 5 für Fahrer 7 und Beifahrer 8 in Abhängigkeit der zugehörigen Blickwinkelbereiche 9, 10 anzuzeigen. Bewegungen des Fahrers 7 in Richtung des zweiten Blickwinkelbereichs 10 des Beifahrers 8 werden in dieser Ausführungsform der Erfindung von der Erfassungseinrichtung 11 detektiert, indem diese gegebenenfalls über eine Verarbeitungseinrichtung 12 mittel- oder unmittelbar die Abrolllänge eines Gurtbands 13 eines Sicherheitsgurts aus einem fahrerseitig vorgesehenen Sicherheitsgurtsystem 14 ermittelt. Hierbei ist es möglich, die tatsächlich abgezogene Abrolllänge des Gurtbands 13 mit einem bestimmten Sollwert, welcher vorzugsweise als Sollbereich beziehungsweise Längentoleranzbereich definiert ist, zu vergleichen. Wird von der Verarbeitungseinrichtung 12 ein Abweichen der Abrolllänge des Gurtbands 12 des fahrerseitig vorgesehenen Sicherheitsgurtsystems 14 von dem Längentoleranzbereich festgestellt, wie es beispielsweise durch ein Herüberbeugen des Fahrers 7 in Richtung des Beifahrers 8 und insbesondere in dessen zweiten Blickwinkelbereich 10 bedingt wird, erhält die Erfassungseinrichtung 11 diese Information von der Verarbeitungseinrichtung 12 und gibt ein Signal an die Steuerungseinrichtung 2 ab. Die Steuerungseinrichtung 2 steuert die zweite Bilddarstellung 5 des Beifahrers 8 nun derart, dass z. B. ein Standbild in der zweiten Bilddarstellung 5 erzeugt wird oder die zweite Bilddarstellung 5 vollkommen abgeschaltet wird, zumindest jedoch eine deutlich eingeschränkte und weder für Fahrer 7 noch Beifahrer 8 zufriedenstellende zweite Bilddarstellung 5 herbeigeführt wird. Der Längentoleranzbereich der Abrolllänge des Gurtbands 13 des fahrerseitig vorgesehenen Sicherheitsgurtsystems 14 kann fahrerspezifisch einstellbar sein. Die Einstellung des Längentoleranzbereichs kann dabei werksseitig oder vom Fahrer 7 selbst vorgenommen werden, was insbesondere in Fällen, in denen verschiedene Fahrer 7 unterschiedlicher Körperfülle ein erfindungsgemäßes Kraftfahrzeug 1 in Abwechslung nutzen, als vorteilhaft angesehen wird. Ein Missbrauch der Einstellung des Längentoleranzbereichs, wie er z. B. im Falle eines dünnen Fahrers 7, der die Einstellung für einen fülligen Fahrers 7 übernimmt oder eines Fahrers 7, der das Gurtband 13 hinter seinem Rücken durchführt, gegeben ist, ist hierbei nicht unumgänglich. Letzterem kann jedoch durch Festlegung eines Mindestmaßes an Abrolllänge des Gurtbands 13 begegnet werden.

In einer Weiterbildung der Erfindung ist es auch denkbar, die Erfassungseinrichtung 11 oder die Steuerungseinrichtung 2 ergänzend mit einem Sensor 15 in einem Gurtschloss 16 des fahrerseitig vorgesehenen Sicherheitsgurtsystems 14 auszustatten und die sachgemäße Wiedergabe von Bilddarstellungen auf dem Anzeigedisplay 3 nur nach ordnungsgemäßer Fixierung des Gurtbands 13 in dem zugehörigen Gurtschloss 16 freizugeben. Zudem kann die Erfassungseinrichtung 11 wiederum über die Verarbeitungseinrichtung 12 mit wenigstens einem Sensor 17 beziehungsweise 18 ausgestattet sein, welcher die Abrolllänge des Gurtbands 13 des fahrerseitig vorgesehenen Sicherheitsgurtsystems 14 über die Drehung einer Welle 19, auf welcher das Gurtband 13 aufwickelbar ist, oder über die Rückholkraft einer beim Abrollend es Gurtbands 13 gespannten Rückholfeder 20 erfasst. Anhand der letztgenannten Ausführungen ist die Abrolllänge des Gurtbands 13 des fahrerseitig vorgesehenen Sicherheitsgurtsystems 14 indirekt ermittelbar.

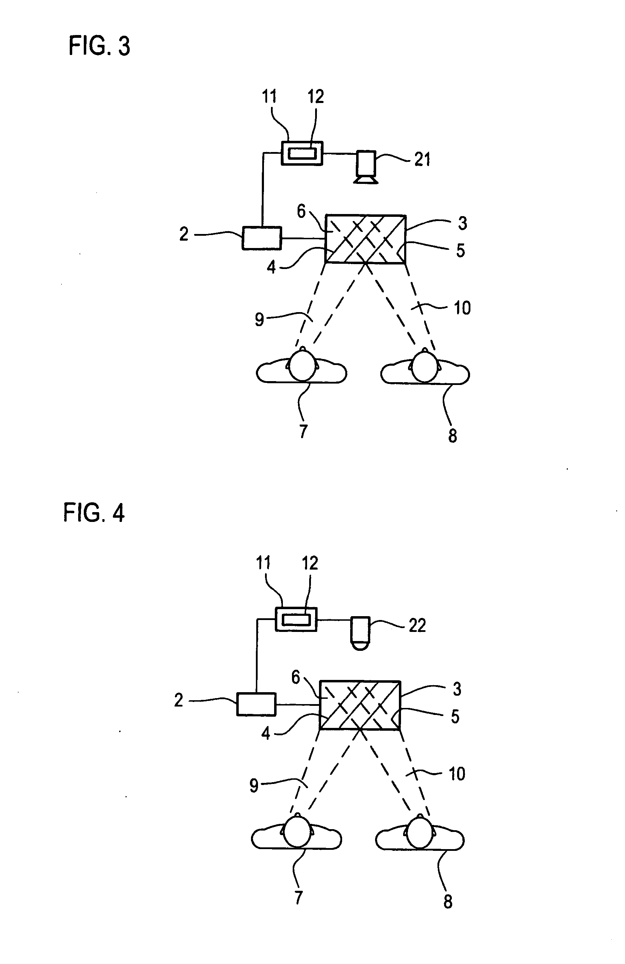

Fig. 3 zeigt eine weitere Ausführungsform der Erfindung. Hierbei ist ergänzend zu obiger Ausführung wenigstens eine Erfassungseinrichtung 11 mit einer Kamera 21 vorgesehen, die die Position des Fahrers 7 aufnimmt, wobei die Bildinformation der Kamera 21 über eine ebenfalls der Erfassungseinrichtung 11 zugehörige Verarbeitungseinrichtung 12 zur Bildanalyse der Kameraaufnahmen ausgewertet wird. Bei der Erfassung einer Bewegung des Fahrers 7 aus seinem ersten Blickwinkelbereich 4 in Richtung des zweiten Blickwinkelbereichs 5 des Beifahrers 8 gibt die Verarbeitungseinrichtung 12 zur Bildanalyse der Kameraaufnahmen ein Signal an die Erfassungseinrichtung 11, welche zusammenwirkend mit der Steuerungseinrichtung 2 die zweite Bilddarstellung 5 in dem zweiten Blickwinkelbereich 10 des Beifahrers 8 derart steuert, dass der Fahrer 7 keine befriedigende Einsicht in diese erlangen kann und seine Aufmerksamkeit infolgedessen wieder dem Verkehrsgeschehen widmet.

In besonders vorteilhafter Ausführung ist die der Erfassungseinrichtung 11 zugehörige Verarbeitungseinrichtung 12 zur Bildanalyse der Kameraaufnahmen mit Mitteln zur Personenerkennung ausgestattet. Diese Mittel dienen als zusätzliche Unterstützung zur Bestimmung der aktuellen Position des Fahrers 7. Die Mittel zur Personenerkennung können eine Gesichtserkennung ermöglichen und sind demnach fähig, schon vergleichsweise kleine Bewegungen, beispielsweise des Kopfes des Fahrers 7, wahrzunehmen. Wird z. B. eine wiederkehrende Drehung des Kopfes des Fahrers 7 in Richtung des zweiten Blickwinkelbereichs 10 des Beifahrers 8 erfasst, kann die Verarbeitungseinrichtung 12 zur Bildanalyse der Kameraaufnahmen ein Signal an die Erfassungseinrichtung 11 senden und gegebenenfalls zusammenwirkend mit den anderen zuvor beschriebenen Maßnahmen zur Bestimmung der Position des Fahrers 7 ein steuerndes Eingreifen der Steuerungseinrichtung 2 in die zweite Bilddarstellung 5 des zweiten Blickwinkelbereichs 10 des Beifahrers 8 bedingen. Die Erfassungseinrichtung beziehungsweise die Verarbeitungseinrichtung 12 zur Bildanalyse der Kameraaufnahmen ist gegebenenfalls als ergänzende Maßnahme zu erachten, die als Korrektur für Signale, die beispielsweise aus den oben genannten Sensoren 15, 17, 18 des Sicherheitsgurtsystems 14 an die Erfassungseinrichtung 11 abgegeben werden, dient. Für den beispielhaften Fall, dass der Fahrer 7 kurzzeitig das Gurtband 13 des fahrerseitig vorgesehenen Sicherheitsgurtsystems 14 aus dem Gurtschloss 16 löst, sonst aber in seiner Position bleibt, erhält die Erfassungseinrichtung 11 ein Signal des Sensors 15 des Sicherheitsgurtsystems 14, wonach das Gurtband 13 nicht mehr ordnungsgemäß in dem Gurtschloss 16 steckt, zugleich signalisiert die Verarbeitungseinrichtung 12 zur Bildanalyse der Kameraaufnahmen der Erfassungseinrichtung 11, dass sich der Fahrer 7 in einer eine Fahrsituation angepassten Sitzposition befindet. Welches Signal die Erfassungseinrichtung 11 an die Steuerungseinrichtung 2 weitergibt, kann beispielsweise über ein Prioritätssystem entschieden werden. Es ist gleichermaßen denkbar, dass die Verarbeitungseinrichtung 12 zur Bildanalyse der Kameraaufnahmen die Information der Sensoren 15, 17, 18 für das Sicherheitsgurtsystem 14 an die Erfassungseinrichtung 11 bestätigt.

Fig. 4 zeigt eine weitere Ausführungsform der Erfindung. Ergänzend zu den in den anderen Ausführungsbeispielen gezeigten Anordnungen, ist hierbei wenigstens ein mit der Erfassungseinrichtung 11 zusammenwirkender, vorzugsweise in der Nähe des Anzeigedisplays 3 angebrachter Abstands- beziehungsweise Näherungssensor 22 vorgesehen, der indirekt die Position des Fahrers 7 erfasst und gegebenenfalls über eine der Erfassungseinrichtung 11 zugehörige Verarbeitungseinrichtung 12 zur Auswertung der Information des Abstands- beziehungsweise Näherungssensors entsprechend Informationen an die Erfassungseinrichtung 11 liefert. Bei Bewegung des Fahrers 7 in Richtung des zweiten Blickwinkelbereichs 10 des Beifahrers 8 verändert sich zwangsweise sein Abstand zu dem Abstandsbeziehungsweise Näherungssensor 22. Bei Anbringung des Abstands- beziehungsweise Näherungssensors 22 in der Nähe des Anzeigedisplays 3 ist in der Regel davon auszugehen, dass sich der Abstand des Fahrers 7 zum Abstands- beziehungsweise Näherungssensor 22 verringert. Der Abstandsbeziehungsweise Näherungssensor 22 gibt diese Information signalartig über die Verarbeitungseinrichtung 12 zur Auswertung der Information des Abstands- beziehungsweise Näherungssensors an die Erfassungseinrichtung 11 weiter, welche nach Überprüfung und einem Abgleich mit Informationen gegebenenfalls anderer installierter Maßnahmen zur Feststellung der Position des Fahrers 7, beispielsweise aus einer übermäßigen Erhöhung der Abrolllänge des Gurtbands 13 des fahrerseitig vorgesehenen Sicherheitsgurtsystems 14, mittelbar über die Steuerungseinrichtung 2 steuernd in die zweite Bilddarstellung 5 des zweiten Blickwinkelbereichs 10 des Beifahrers 8 eingreift. Wiederum ist denkbar, den Abstands- beziehungsweise Näherungssensor 22 und die Erfassungseinrichtung 12 zur Auswertung der Information des Abstands- beziehungsweise Näherungssensors als plausibilisierende Kriterien anderer Maßnahmen zur Erfassung der Position des Fahrers 7 zu nutzen. Der Abstands- beziehungsweise Näherungssensor 22 trägt so ergänzend und gegebenenfalls unterstützend zu einem möglichst vollständigen Bild der tatsächlichen Position des Fahrers 7 bei. Der Abstands- beziehungsweise Näherungssensor 22 kann vorzugsweise als Ultraschall- oder Infrarotsensor ausgebildet sein.

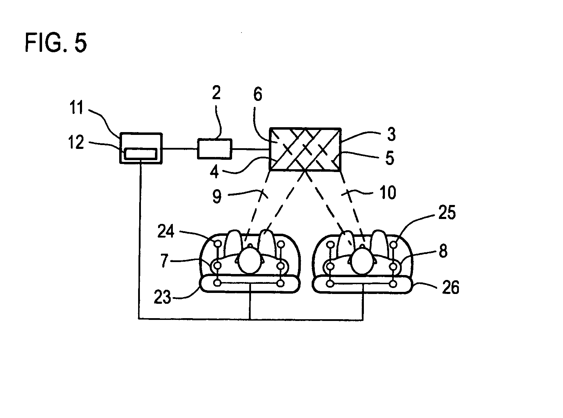

Fig. 5 zeigt eine weitere Ausführungsform der Erfindung. Ergänzend zu den vorangehenden Anordnungen ist hierbei wenigstens eine im Fahrersitz 23 angebrachte Sensoranordnung 24 als Teil der Erfassungseinrichtung 11 vorgesehen, welche die Position des Fahrers 7 erfasst. Die Positionserfassung erfolgt in dieser Ausführung indirekt über eine Änderung des auf dem Fahrersitz 23 lastenden Gewichts des Fahrers 7 beziehungsweise einer Änderung der durch Belegung des Fahrersitzes 23 gegebenen Gewichtsverteilung. Das auf dem Fahrersitz 23 lastende Gewicht beziehungsweise seine Verteilung ist in starkem Maße von der Position des Fahrers 7 abhängig. Bei einer Bewegung des Fahrers 7 in Richtung des zweiten Blickwinkelbereichs 10 des Beifahrers 8 wirkt auf den Fahrersitz 23 eine von einer ordnungsgemäßen Sitzposition des Fahrers 7 verschiedene Gewichtskraft beziehungsweise Gewichtskraftverteilung. Eine entsprechende Änderung wird von der Sensoranordnung 24 erfasst und signalartig, gegebenenfalls über eine Verarbeitungseinrichtung 12 zur Auswertung der Gewichtskraft beziehungsweise deren Verteilung auf dem Fahrersitz 23, an die Erfassungseinrichtung 11 weitergegeben und derart mittelbar über die Steuerungseinrichtung 2 steuernd in die zweite Bilddarstellung 5 des zweiten Blickwinkelbereichs 10 des Beifahrers 8 eingegriffen. Wiederum ist es möglich, die Information der Sensoranordnung 24 in der Erfassungseinrichtung 11 bei Vorhandensein von Informationen anderer installierter Maßnahmen zur Feststellung der Position des Fahrers 7, beispielsweise einer übermäßigen Erhöhung der Abrolllänge des Gurtbands 13 des fahrerseitig vorgesehenen Sicherheitsgurtsystems 14, zusammenzuführen und abzugleichen. Die Änderung der Last auf dem Fahrersitz 23 offenbart sich regelmäßig in der Belastung der eigentlichen Sitzfläche, kann aber auch oder zusätzlich in einer Belastung der Lehnfläche wirken. Hier ist in besonders vorteilhafter Ausgestaltung der Erfindung eine ergänzende Sensoranordnung 24 zur Bestimmung des Gewichts des Fahrers 7 beziehungsweise seiner Verteilung vorgesehen. Die im Fahrersitz 23 befindliche Sensoranordnung 24 ist in vorteilhafter Weise als sogenanntes Sensorarray zur großflächigen Gewichtsbestimmung ausgebildet.

Fig. 5 zeigt überdies eine zusätzliche Sensoranordnung 25 im Beifahrersitz 26, welche eine Belegung des Beifahrersitzes 26 mit einem Beifahrer 8 feststellt. Diese Sensoranordnung 25 ist ebenso, gegebenenfalls über eine Verarbeitungseinrichtung 12 zur Auswertung der Gewichtskraft beziehungsweise deren Verteilung auf dem Beifahrersitz 26, mit der Erfassungseinrichtung 11 verbunden. Die Erfassungseinrichtung 11 gibt in dieser als Ergänzung zu der aus dem vorherigen Abschnitt beschriebenen Sensoranordnung 24 anzusehenden Ausführungsform nur bei Belegung des Beifahrersitzes 26 mit einem Beifahrer 8 mittelbar über die Steuerungseinrichtung 2 die zweite Bilddarstellung 5 in dem zweiten Blickwinkelbereich 10 für den Beifahrer 8 frei. Die im Beifahrersitz 26 befindliche Sensoranordnung 25 ist wiederum in vorteilhafter Weise als sogenanntes Sensorarray zur großflächigen Gewichtsbestimmung ausgebildet.

## Patentansprüche

1. Kraftfahrzeug (1) mit einer Wiedergabeeinrichtung zur Wiedergabe von Bildinformationen umfassend eine Steuerungseinrichtung (2) und ein Anzeigedisplay (3), wobei über die Steuerungseinrichtung (2) gleichzeitig eine erste (4) und eine zweite Bilddarstellung (5), die jeweils die Anzeigefläche (6) des Anzeigedisplays (3) belegen, darstellbar sind, wobei die erste Bilddarstellung (4) nur aus einem ersten ausgezeichneten Blickwinkelbereich (9), der zum Fahrer (7) gerichtet ist, und die zweite Bilddarstellung (5) nur aus einem zweiten Blickwinkelbereich (10), der zum Beifahrer (8) gerichtet ist, erkennbar ist, und wobei wenigstens eine der Steuerungseinrichtung (2) zugeordnete Erfassungseinrichtung (11) vorgesehen ist, über die die Position des Fahrers (7) direkt oder indirekt erfassbar ist, wobei die Wiedergabe der zweiten Bilddarstellung (5) in Abhängigkeit des Positionserfassungsergebnisses steuerbar ist,
**dadurch gekennzeichnet,**
**dass** die Erfassungseinrichtung (11) als eine Erfassungseinrichtung (11) zur unmittelbaren oder mittelbaren Ermittlung der Abrolllänge eines Gurtbands (13) eines Sicherheitsgurts eines fahrerseitig vorgesehenen Sicherheitsgurtsystems (14) ausgebildet ist, wobei die Wiedergabe der zweiten Bildderstellung (5) in Abhängigkeit eines Vergleichs der erfassten Abrollänge mit einem Längentoleranzbereich steuerbar ist.

2. Kraftfahrzeug nach Anspruch 1,
**dadurch gekennzeichnet,**
**dass** der Längentoleranzbereich fahrerspezifisch einstellbar ist, wobei die Einstellung ab Werk oder vom Fahrer (7) selbst erfolgen kann.

3. Kraftfahrzeug nach Anspruch 1 oder 2,
**dadurch gekennzeichnet,**
**dass** über die Erfassungseinrichtung (11) oder die Steuerungseinrichtung (2) zusätzlich das Einstecken des Sicherheitsgurts eines Sicherheitsgurtsystems (14) in ein zugehöriges Gurtschloss (16) ermittelbar ist, wobei die Wiedergabe zusätzlich in Abhängigkeit des angelegten Sicherheitsgurts steuerbar ist.

4. Kraftfahrzeug nach einem der vorangehenden Ansprüche,
**dadurch gekennzeichnet,**
**dass** die Erfassungseinrichtung (11) zusätzlich einen Sensor (16, 17) umfasst, der direkt mit dem Gurtband (13) des Sicherheitsgurts eines Sicherheitsgurtsystems (14) zusammenwirkt oder der die Drehung einer das Gurtband (13) tragenden Wickelwelle (19) oder die Rückstellkraft einer beim Abrollen des Sicherheitsgurts gespannten Rückholfeder (20) erfasst.

5. Kraftfahrzeug nach Anspruch 4,
**dadurch gekennzeichnet,**
**dass** die Erfassungseinrichtung (11) zusätzlich wenigstens eine Kamera (21) und eine dieser zugeordnete Verarbeitungseinrichtung (12) zur Bildanalyse der Kameraaufnahmen zur Erfassung der Position des Fahrers (7) umfasst.

6. Kraftfahrzeug nach Anspruch 5,
**dadurch gekennzeichnet,**
**dass** Mittel zur Personenerkennung anhand der von der Kamera (21) gelieferten Bildinformationen vorgesehen sind.

7. Kraftfahrzeug nach einem der vorangehenden Ansprüche 4 - 6,
**dadurch gekennzeichnet,**
**dass** die Erfassungseinrichtung (11) zusätzlich wenigstens einen vorzugsweise displaynah angebrachten Abstands- beziehungsweise Näherungssensor (22) zur Erfassung der Position des Fahrers (7) umfasst.

8. Kraftfahrzeug nach Anspruch 7,
**dadurch gekennzeichnet,**
**dass** der Abstands- beziehungsweise Näherungssensor (22) ein Ultraschall- oder Infrarotsensor ist.

9. Kraftfahrzeug nach einem der vorangehenden Ansprüche 4 - 8,
**dadurch gekennzeichnet,**
**dass** die Erfassungseinrichtung (11) zusätzlich wenigstens eine im Fahrersitz (23) angeordnete erte Sensoranordnung (24) umfasst, über welche als Maß für die Position des Fahrers (7) die Änderung des auf dem Sitz lastenden Fahrergewichts beziehungsweise seiner Verteilung ermittelbar ist.

10. Kraftfahrzeug nach Anspruch 9,
**dadurch gekennzeichnet,**
**dass** die Erfassungseinrichtung (11) zusätzlich wenigstens eine im Beifahrersitz (26) angeordnete zweite Sensoranordnung (25) umfasst, über welche eine Sitzbelegung erfassbar ist, wobei die Wiedergabe der zweiten Bilddarstellung (5) nur bei erfasster Sitzbelegung möglich ist.

11. Kraftfahrzeug nach Anspruch 10
**dadurch gekennzeichnet,**
**dass** die erste und zweite Sensoranordnung (24, 25) in Form von Sensorarrays mit verteilt angeordneten Sensorelementen zur großflächigen Erfassung des Gewichts beziehungsweise der Gewichtsverteilung ausgebildet sind.

## Claims

1. Motor vehicle (1) with a display device for displaying image information, comprising a control device (2) and a screen (3), wherein a first (4) and a second image representation (5), which each occupy the display surface (6) of the screen (3), can be displayed simultaneously via the control device (2), wherein the first image representation (4) is visible only from a first distinctive viewing angle range (9), which is directed towards the driver (7), and the second image representation (5) is visible only from a second viewing angle range (10), which is directed towards the passenger (8), and wherein at least one detection device (11) is provided which is assigned to the control device (2) and via which the position of the driver (7) can be directly or indirectly detected, wherein the displaying of the second image representation (5) can be controlled as a function of the position detection result, **characterised in that** the detection device (11) is configured as a detection device (11) for directly or indirectly determining the unwound length of a belt strap (13) of a safety belt of a safety belt system (14) provided on the driver side, wherein the displaying of the second image representation (5) can be controlled as a function of a comparison of the detected unwound length with a length tolerance range.

2. Motor vehicle according to claim 1, **characterised in that** the length tolerance range is adjustable in a driver-specific manner, wherein the adjustment may take place ex works or by the driver (7) himself.

3. Motor vehicle according to claim 1 or 2, **characterised in that** additionally the insertion of the safety belt of a safety belt system (14) into an associated belt fastener (16) can be determined via the detection device (11) or the control device (2), wherein the display can additionally be controlled as a function of the inserted safety belt.

4. Motor vehicle according to one of the preceding claims, **characterised in that** the detection device (11) additionally comprises at least one sensor (16, 17) which cooperates directly with the belt strap (13) of the safety belt of a safety belt system (14) or which senses the rotation of a winding shaft (19) carrying the belt strap (13) or the return force of a return spring (20) that is tensioned during the unwinding of the safety belt.

5. Motor vehicle according to claim 4, **characterised in that** the detection device (11) additionally comprises at least one camera (21) and a processing device (12) associated therewith for analysing the camera images in order to detect the position of the driver (7).

6. Motor vehicle according to claim 5, **characterised in that** means are provided for recognising persons on the basis of the image information supplied by the camera (21).

7. Motor vehicle according to one of the preceding claims 4 to 6, **characterised in that** the detection device (11) additionally comprises at least one distance or proximity sensor (22), preferably fitted close to the screen, for detecting the position of the driver (7).

8. Motor vehicle according to claim 7, **characterised in that** the distance or proximity sensor (22) is an ultrasonic sensor or infrared sensor.

9. Motor vehicle according to one of the preceding claims 4 to 8, **characterised in that** the detection device (11) additionally comprises at least one first sensor arrangement (24) which is arranged in the driver's seat (23) and via which the change in the driver's weight loading the seat and/or in the distribution thereof can be determined as an indication of the position of the driver (7).

10. Motor vehicle according to claim 9, **characterised in that** the detection device (11) additionally comprises at least one second sensor arrangement (25) which is arranged in the passenger seat (26) and via which a seat occupancy can be detected, wherein the displaying of the second image representation (5) is possible only when seat occupancy is detected.

11. Motor vehicle according to claim 10, **characterised in that** the first and second sensor arrangement (24, 25) are configured in the form of sensor arrays comprising sensor elements arranged in a distributed manner for detecting the weight and/or the weight distribution over a large surface area.

## Revendications

1. Véhicule automobile (1) équipé d'un dispositif de restitution pour la restitution d'informations en image comprenant un dispositif de commande (2) et un écran d'affichage (3), une première représentation en image (4) et une seconde représentation en image (5), qui occupent respectivement la surface d'affichage (6) de l'écran d'affichage (3), pouvant être représentées simultanément au moyen du dispositif de commande (2), la première représentation en image (4) pouvant être identifiée seulement à partir d'une première zone d'angle de vue (9) dessinée, qui est orientée vers le conducteur (7), et la seconde représentation en image (5) pouvant être identifiée seulement à partir d'une seconde zone d'angle de vue (10), qui est dirigée vers le passager avant (8), et au moins un dispositif de détection (11) attribué au dispositif de commande (2) étant prévu, par lequel la position du conducteur (7) peut être dictée directement ou indirectement, la restitution de la seconde représentation en image (5) pouvant être commandée en fonction du résultat de détection de position,
**caractérisé en ce que**
le dispositif de détection (11) est conçu sous forme d'un dispositif de détection (11) pour la détermination directe ou indirecte de la longueur de déroulement d'une sangle (13) d'une ceinture de sécurité d'un système de ceinture de sécurité (14) prévu côté conducteur, la restitution de la seconde représentation en image (5) pouvant être commandée en fonction d'une comparaison de la longueur de déroulement détectée avec une plage de tolérances de longueur.

2. Véhicule automobile selon la revendication 1,
**caractérisé en ce que**
la plage de tolérances de longueur est réglable de façon spécifique au conducteur, le réglage pouvant s'effectuer au départ de l'usine ou par le conducteur (7) même.

3. Véhicule automobile selon la revendication 1 ou 2,
**caractérisé en ce que**
en supplément l'introduction de la ceinture de sécurité d'un système de ceinture de sécurité (14) dans une boucle de fermeture (16) spécifique peut être déterminée au moyen du dispositif de détection (11) ou du dispositif de commande (2), la restitution pouvant être commandée en supplément en fonction de la ceinture de sécurité mise en place.

4. Véhicule automobile selon l'une quelconque des revendications précédentes,
**caractérisé en ce que**
le dispositif de détection (11) comprend en supplément au moins un capteur (16, 17), qui coopère directement avec la sangle (13) de la ceinture de sécurité d'un système de ceinture de sécurité (14) ou qui détecte la rotation d'un arbre d'enroulement (19) portant la sangle (13) ou la force de rappel d'un ressort de rappel (20) tendu lors du déroulement de la ceinture de sécurité.

5. Véhicule automobile selon la revendication 4,
**caractérisé en ce que**
le dispositif de détection (11) comprend en supplément au moins une caméra (21) et un dispositif de traitement (12) associé à cette caméra pour l'analyse d'image des prises de vue de caméra pour la détection de la position du conducteur (7).

6. Véhicule automobile selon la revendication 5,
**caractérisé en ce que**
des moyens pour l'identification de personnes à l'aide des informations en image fournies par la caméra (21) sont prévus.

7. Véhicule automobile selon l'une quelconque des revendications 4 à 6 précédentes,
**caractérisé en ce que**
le dispositif de détection (11) comprend en supplément au moins un capteur de distance ou de proximité (22) placé de préférence près de l'écran pour la détection de la position du conducteur (7).

8. Véhicule automobile selon la revendication 7,
**caractérisé en ce que**
le capteur de distance ou le capteur de proximité (22) est un capteur à ultrasons ou un capteur à infrarouge.

9. Véhicule automobile selon l'une quelconque des revendications 4 à 8 précédentes,
**caractérisé en ce que**
le dispositif de détection (11) comprend en supplément au moins un premier dispositif capteur (24) disposé dans le siège conducteur (23), par lequel la variation du poids du conducteur reposant sur le siège ou de sa répartition peut être déterminée en tant que référence pour la position du conducteur (7).

10. Véhicule automobile selon la revendication 9,
**caractérisé en ce que**
le dispositif de détection (11) comprend en supplément au moins un second dispositif capteur (25) disposé dans le siège de passager avant (26), par lequel une occupation de siège peut être détectée, la restitution de la seconde représentation en image (5) étant possible seulement lorsque l'occupation de siège est détectée.

11. Véhicule automobile selon la revendication 10,
**caractérisé en ce que**
le premier et le second dispositifs capteurs (24, 25) sont conçus sous forme de systèmes capteurs dotés d'éléments capteurs disposés de façon répartie pour la détection sur une grande surface du poids ou de la répartition du poids.
